# FASCICULE DE BREVET EUROPEEN

(11) **EP 3 655 229 B1**
(45) Date de publication et mention de la délivrance du brevet: **08.09.2021**
(21) Numéro de dépôt: 18752594.4
(22) Date de dépôt: 20.07.2018
(51) Int. Cl.: B29C 49/42, B29C 53/50, B29C 53/52, B29B 11/02, B29B 11/04, B29C 49/02, B29C 65/08, B29K 23/00, B29L 31/00, B29B 11/00, B29C 69/00, B29C 65/00, B29C 49/64, B29C 49/78

(54) **MACHINE DE FABRICATION D'ARTICLES EN PLASTIQUE PAR SOUFFLAGE**
MASCHINE ZUR HERSTELLUNG VON KUNSTSTOFFGEGENSTÄNDEN DURCH BLASFORMEN
MACHINE FOR MANUFACTURING PLASTIC ITEMS BY BLOW MOULDING

(30) Priorité: 21.07.2017 FR 1756965
(43) Date de publication de la demande: 27.05.2020
(73) Titulaire: Eleftheriou, Stylianos, 78160 Marly Le Roi (FR)
(72) Inventeur: Eleftheriou, Stylianos, 78160 Marly Le Roi (FR)
(74) Mandataire: Gauchet, Fabien Roland
(86) Numéro de dépôt international: PCT/FR2018/051855
(87) Numéro de publication internationale: WO 2019/016486

(56) Documents cités:
- EP-A1- 1 334 817
- EP-A1- 2 321 113
- US-A1- 2015 266 228

## Description

### DOMAINE TECHNIQUE DE L'INVENTION

L'invention se rapporte au domaine de l'emballage et plus particulièrement de la fabrication par soufflage de bouteilles ou autres articles à partir d'une feuille en plastique semi-rigide c'est-à-dire qui a tendance à reprendre sa forme initiale après déformation. Les matières de type polypropylène ou PEHD ou équivalents, sont plus particulièrement concernées par l'invention.

### ETAT DE LA TECHNIQUE ANTERIEURE

Dans le document FR 2 851 227, on décrit un dispositif et un procédé de soufflage de récipients formés à partir d'une bande plastique thermoformable. Le procédé propose de conformer la bande en un tube qui est chauffé puis introduit dans un moule. De l'air injecté dans le tube permet de le déformer en appliquant sa paroi contre la surface interne de l'empreinte du moule. Sur ce principe, une machine est décrite dans ce document antérieur ; la machine divulguée dans ce document comprend un bâti sur lequel sont montés, successivement le long d'une trajectoire rectiligne de la bande dans la machine, une canne de soufflage raccordée à un organe de distribution d'air et coaxiale à une direction longitudinale de la bande, un conformateur agencé autour de la canne de soufflage pour ramener des bords longitudinaux de la bande au voisinage l'un de l'autre de manière à conformer la bande en un tube autour de la canne de soufflage, un organe de soudage des bords adjacents de la bande conformée en tube, au moins un organe de chauffage de la bande, un moule comportant deux parties mobiles relativement l'une à l'autre, et un dispositif d'entraînement de la bande le long de sa direction longitudinale. L'organe de soufflage, l'organe de soudage, l'organe de chauffage, le moule et le dispositif d'entraînement sont reliés à une unité de pilotage qui est agencée pour commander ceux-ci de manière à mettre en œuvre le procédé de soufflage.

De nombreuses autres machines basées sur ce même principe sont connues par ailleurs.

Par exemple le document FR 3 018 723 décrit une machine apte à fabriquer par soufflage des articles en plastique à partir d'une feuille de plastique semi-rigide. Cette machine est dite 'cyclique' en ligne et elle comprend au moins une canne de guidage associée à un conformateur pour former des tubes à partir de bandes, des moyens de soudage des bords des articles, des moyens de chauffage, de soufflage des tubes dans des moules.

On connait aussi le document FR 2 933 958 qui précise les moyens de conformation en cylindre, dotés de deux mâchoires caractéristiques mobiles et arrangées autour d'une canne ; l'une des mâchoires présente une lumière en regard de laquelle on place des moyens de soudage.

On s'est aperçu que l'art antérieur, bien que permettant de fabriquer des bouteilles en plastique exemptes de défauts, présente des limitations en termes de cadences et de fiabilité. D'autre part cette technologie ne permet pas de gérer facilement des épaisseurs de feuilles plastiques aptes à produire des emballages de volume supérieur à 500 ml ou équivalents. Les particularités techniques de telles installations en rendent son coût important.

### EXPOSE DE L'INVENTION

L'invention vise à remédier aux inconvénients de l'état de la technique et notamment à proposer une machine de fabrication d'articles en plastique par soufflage, comprenant successivement le long du trajet de fabrication : un rouleau de matière plastique sous la forme d'au moins une bande et des moyens d'entrainement en rotation dudit rouleau ; au moins un conformateur apte à former des tubes à partir de ladite bande.

Pour ce faire est proposé selon un premier aspect de l'invention une machine qui comprend en outre des moyens de soudage longitudinal desdits tubes, fixes par rapport aux tubes mobiles ; des moyens de découpe transversale des tubes, agencés de sorte à former des tronçons de tubes ou préformes ; des moyens de maintien et de déplacement des tronçons de tubes perpendiculairement à leur axe longitudinal ; au moins un four de chauffage dans lequel se déplacent lesdits tronçons de tubes (préformes) en position verticale selon une trajectoire horizontale ; une première tourelle de support de moules dont la vitesse de rotation est synchronisée par une unité de pilotage avec la vitesse des tronçons de tubes en sortie du four de sorte à loger lesdits tronçons dans les moules ; des moyens de traitement des tronçons de tubes (préformes) au niveau de la première tourelle ; des moyens de soufflage d'un fluide sous pression dans les moules afin de donner une forme définitive aux préformes c'est-à-dire de former des bouteilles ; une deuxième tourelle dont la vitesse est synchronisée avec la vitesse de ladite première tourelle et agencée de sorte à évacuer les bouteilles en dehors desdits moules, ladite synchronisation étant opérée par l'unité de pilotage.

On décrit ici une machine dans laquelle le plastique défile en continu devant un poste de soudage fixe après avoir été conformé et avant d'être découpé en tronçons, en amont d'un four qui est globalement horizontal et donc d'accès facile notamment pour la maintenance. Bon nombre d'avantages notamment en ce qui concerne l'ergonomie sont induits par ces éléments caractéristiques, comme il sera détaillé ci-après. Le fonctionnement par défilement en continu des produits à fabriquer permet de limiter les usures et les casses mécaniques, de s'affranchir des problèmes de vibration et de travailler à des cadences élevées.

Selon l'invention, la machine comprend en outre un moyen de découpage de la matière plastique en bandes longitudinales situé entre le rouleau et le conformateur.

Selon l'invention, ledit moyen de soudage comprend au moins une sonotrode agencée de sorte à réaliser un soudage en continu, par des soudures longitudinales desdits tubes, ladite sonotrode coopère avec une enclume et des moyens de mise en contrainte de la feuille plastique. Plus précisément, ladite enclume présente un profil agencé de sorte à concentrer l'énergie de soudure selon une ligne.

Autrement dit, le plastique défile en continu devant le poste de soudure qui est fixe (principe d'une couture dans une machine à coudre). La vitesse de soudure est élevée, plus importante que dans les machines de l'art antérieur dans lesquelles il est nécessaire de lever la sonotrode (apte au soudage) à chaque transfert du plastique. De plus un nombre réduit de têtes de soudage est nécessaire ; on réduit ainsi le nombre de réglages de position des têtes de soudage.

En outre, le conformateur comprend des moyens de mise en forme placés en amont du moyen de soudage, tels que des diabolos.

Le positionnement du plastique dans le conformateur tubulaire est mieux maitrisé. Le plastique étant directement guidé vers sa position de soudage en butée sur ses deux bords latéraux. Le conformateur selon l'invention ne s'ouvre pas et ne se ferme pas à chaque cycle puisque c'est la matière plastique qui glisse jusqu'à la position de soudure. La fiabilité du positionnement du recouvrement plastique s'en trouve améliorée, et donc celle de la soudure elle-même.

De façon intéressante, lesdits moyens de maintien des tronçons de tube dans le four permettent en outre la rotation desdits tronçons autour de leur axe longitudinal lorsque lesdits tronçons circulent dans ledit four. Ceci assure une homogénéité de chauffe desdits tronçons sur tout leur pourtour. De plus les tronçons présentant une hauteur sensiblement égale à la hauteur finale de la bouteille et étant individuellement maintenus en partie haute et en partie basse, les risques d'affaissement et/ou de torsion et/ou de déformation dans le four sont minimisés.

Avantageusement, mais facultativement, ledit four comprend des moyens tels que des lampes de chauffage par rayonnement, disposées à proximité de la trajectoire desdits tronçons. De façon intéressante on peut ajouter des miroirs en face des lampes de chauffage ce qui réduit encore la consommation énergétique du four, toutes choses égales par ailleurs.

En outre, l'unité de pilotage permet une synchronisation entre la vitesse de rotation de ladite première tourelle et la vitesse de déplacement des moyens de maintien des tronçons de tubes dans ledit four.

Par ailleurs, les moyens de traitement desdites préformes dans la première tourelle comprennent des moyens pour ouvrir et fermer ledit moule, de façon synchronisée avec le soufflage dudit fluide à l'intérieur desdites préformes placées dans le moule.

Préférentiellement, mais facultativement, le plastique dans le four est chauffé à une température moyenne d'environ 150°C.

Selon un mode de réalisation de l'invention, les navettes coopèrent avec des moyens de maintien des préformes en deux points à proximité de leurs extrémités longitudinales.

Selon un autre mode de réalisation, les moyens de traitement desdites préformes dans la première tourelle comprennent en outre des moyens de mise en place d'un calibre de col au niveau d'une extrémité longitudinale desdites préformes placées dans ledit moule, synchronisés avec le soufflage dudit fluide à l'intérieur desdites préformes. Optionnellement, la machine comporte des moyens de thermorégulation propres du calibre de col.

### BREVE DESCRIPTION DES FIGURES

D'autres caractéristiques et avantages de l'invention ressortiront à la lecture de la description qui suit, en référence aux figures annexées, qui illustrent :
- la figure 1, un schéma global des principaux postes fonctionnels mis en œuvre selon un premier mode de réalisation de l'invention ;
- la figure 2, un schéma des postes de découpe longitudinale, de soudure et de découpe en tronçons ;
- la figure 3, une perspective du poste de soudage ;
- la figure 4, une vue de face du poste de soudage ;
- la figure 5, un schéma détaillé des moyens de soudage ;
- les figures 6 à 11, les principales étapes mises en œuvre par la machine selon l'invention ;
- la figure 12, une étape de mise en place d'un calibre de col mise en œuvre par la machine selon l'invention ; et,
- la figure 13, une variante de l'étape de la figure 12.

Pour plus de clarté, les éléments identiques ou similaires sont repérés par des signes de référence identiques sur l'ensemble des figures.

### DESCRIPTION DETAILLEE D'UN MODE DE REALISATION

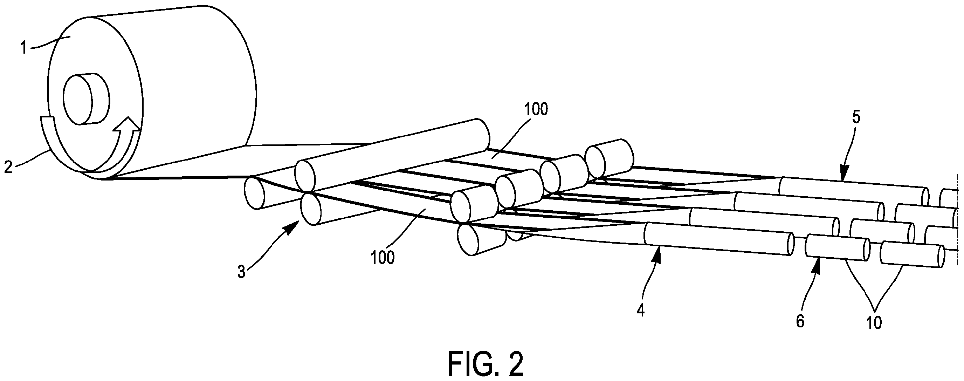

De façon connue en soi, un rouleau 1 de feuille de matière plastique constitue l'alimentation en matière première ; ce rouleau est motorisé de façon à créer une rotation autour de son axe principal. La flèche 2 sur la figure 2 symbolise l'entrainement en rotation. De façon connue aussi, des moyens 3 de découpage longitudinal c'est-à-dire selon la longueur de la feuille plastique sont prévus juste en aval du rouleau 1. Les moyens 3 sont visibles, schématisés par deux cylindres sur la figure 2. Tout moyen connu en soi peut être ici choisi. Les bandes 100 de matière plastique ainsi formées sont ensuite maintenues et déplacées vers au moins un conformateur 4 afin de former des tubes à partir desdites bandes. La laize de chaque bande 100 correspond au périmètre du tube à fabriquer.

En variante de réalisation, le rouleau 1 de matière plastique comporte une seule bande dont la laize correspond au périmètre du tube à fabriquer. Dans une autre variante de réalisation, le rouleau 1 de matière plastique comporte deux ou plus bandes adjacentes dont la laize de chacune des bandes adjacentes correspond au périmètre du tube à fabriquer. Dans ces deux variantes, la ou les bandes étant prédécoupées à la bonne largeur, les moyens 3 de découpage longitudinal ne sont plus nécessaires.

De façon innovante, la ou chaque bande 100 est alors soudée longitudinalement en continu par des moyens de soudage appropriés 5 ; de préférence, on utilise une technologie à base d'ultrasons telle qu'une sonotrode pour réaliser ce soudage en continu.

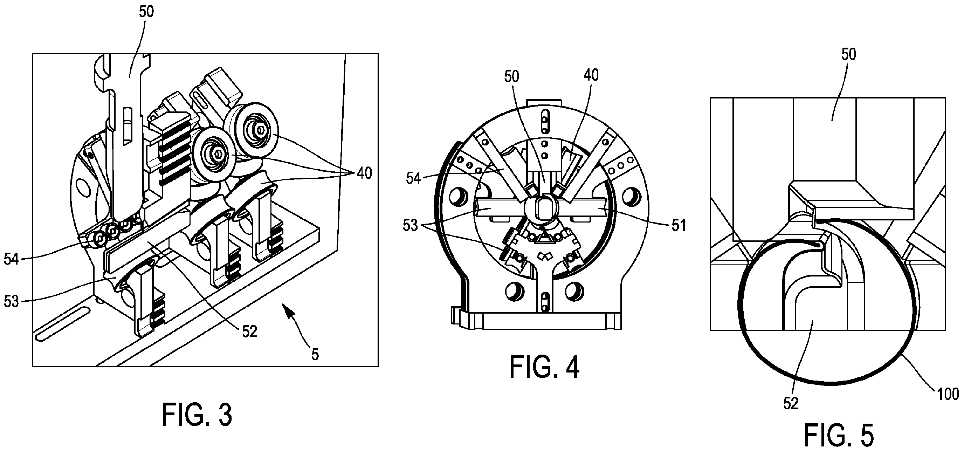

Les figures 3 à 5 illustrent un poste de soudage selon l'invention. Plus précisément la figure 3 montre que le poste de conformation et de soudage (encore appelé moyens de soudage dans ce texte) comprend notamment des diabolos fixes 40 de mise en forme qui maintiennent chaque bande 100 en forme de tube, tout en autorisant une translation selon l'axe longitudinal du tube mis en forme. Un nombre adéquat de diabolos est choisi afin d'entourer la bande et de lui donner sa forme finale ou quasi finale. En aval des diabolos 40 de mise en forme, une sonotrode 50 ou tout moyen techniquement équivalent est prévue et constitue la partie vibrante du module ultrasons. La vibration crée un échauffement du plastique par frottement entre les deux bords latéraux de la bande 100. La figure 5 montre mieux le positionnement de la bande semi-rigide 100 et en particulier on voit que ses deux bords latéraux sont en butée latéralement afin de parfaitement maîtriser la largeur de recouvrement d'un bord sur l'autre juste en amont de la soudure. Puis les deux bords positionnés l'un sur l'autre glissent sur une pièce nommée enclume 52 qui est une contrepartie fixe et rigide. Le positionnement des bords latéraux de la bande est ici bien maîtrisé. Ceci permet de mettre en œuvre des profils d'enclume 52 aptes à concentrer l'énergie de soudure sur une ligne et positionnés par rapport au recouvrement des deux bords de la bande. On comprend que le profil de l'enclume 52 est choisi et calculé avec soin. Par ailleurs des diabolos 53 de mise en contrainte du plastique 100 contre la butée de l'enclume 52 sont en outre prévus, au niveau et sous la sonotrode 50. Des galets 54 sont placés au-dessus de l'enclume 52 afin de conforter le positionnement de la bande à ce niveau c'est-à-dire à proximité immédiate de la sonotrode 50. A l'arrêt, la sonotrode 50 est relevée afin de permettre la mise en place de la bande 100 ; bien entendu en phase de soudage, la sonotrode 50 est appliquée contre le recouvrement plastique des deux bords latéraux de la bande 100, à pression constante, afin de faire fondre le plastique à ce niveau et de réaliser la soudure. Ainsi le plastique est mis en forme en continu puis soudé au plus près avec une sonotrode courte. La soudure obtenue est parfaitement homogène sur sa longueur car le recouvrement bord à bord est constant et maîtrisé lors de la soudure.

Une telle soudure en continu permet de s'affranchir du recouvrement de soudure d'un pas sur l'autre. De façon connue, en fonctionnement dit cyclique, pour assurer un trait de soudure continue de bonne qualité, une zone de recouvrement de soudure est nécessaire entre chaque pas. La zone de recouvrement de la soudure est une zone de fragilité mécanique. Cette technique connue pose des problèmes car les bouteilles ayant des hauteurs différentes il est alors nécessaire de dimensionner la sonotrode pour le format de bouteille le plus grand, de sorte que la zone de recouvrement peut être importante si l'écart de hauteur entre la plus petite et la plus grande bouteille à fabriquer, est important. La présente invention, par la soudure longitudinale continue, évite ce problème. De plus la vitesse de soudure peut être plus importante que dans l'art antérieur connu. A titre illustratif la vitesse de soudure selon l'invention est de l'ordre de 300 à 500 mm par seconde tandis que de façon connue cette vitesse est inférieure à 100 mm par seconde.

Le nombre de têtes de soudure est réduit vis-à-vis de l'art antérieur, toutes choses égales par ailleurs. Ainsi, pour fabriquer 20 000 bouteilles par heure, l'invention prévoit trois ou quatre têtes de soudure en fonction notamment de la taille des bouteilles, et de l'épaisseur du plastique ; l'art antérieur en nécessite quatorze. Autrement dit, on divise par 3 ou 4 le nombre de têtes de soudure, ce qui représente une économie certaine sachant par ailleurs que les têtes de soudure représentent l'équipement le plus cher de l'installation. Par ailleurs on choisit des têtes de soudure de petite dimension et des générateurs de moindre puissance donc peu onéreux. A titre illustratif, des têtes de sonotrode commercialisées sous les marques Branson, Hermann ou Dukane, de 20 kH dotées de générateurs de moins de 1000 Watts peuvent être utilisées même à des cadences élevées.

Cette simplification liée au nombre réduit de têtes de soudure, réduit aussi le réglage de la position des têtes. De plus, les pertes de matière au démarrage sont faibles. On souligne à nouveau que les têtes de soudure sont fixes ; c'est la matière plastique qui est en mouvement de défilement et qui est aisément positionnée, de façon maîtrisée, préférentiellement au-dessous des têtes de soudure. Une fiabilité de soudure est ainsi obtenue selon l'invention. De plus le défilement continu induit une précision de soudure par la précision du positionnement ; il est ici facile de mettre en œuvre un directeur d'énergie afin d'optimiser la soudure par ultrasons. Le directeur d'énergie est un profil sur l'enclume de soudure qui permet de concentrer les ultrasons sur une ligne.

En aval du poste de formation des tubes, relativement au sens de défilement de la matière plastique dans la machine de fabrication selon l'invention, on prévoit des moyens 6 de découpe transversale des tubes aptes à former des tronçons de tubes 10. En soi, cette découpe est connue.

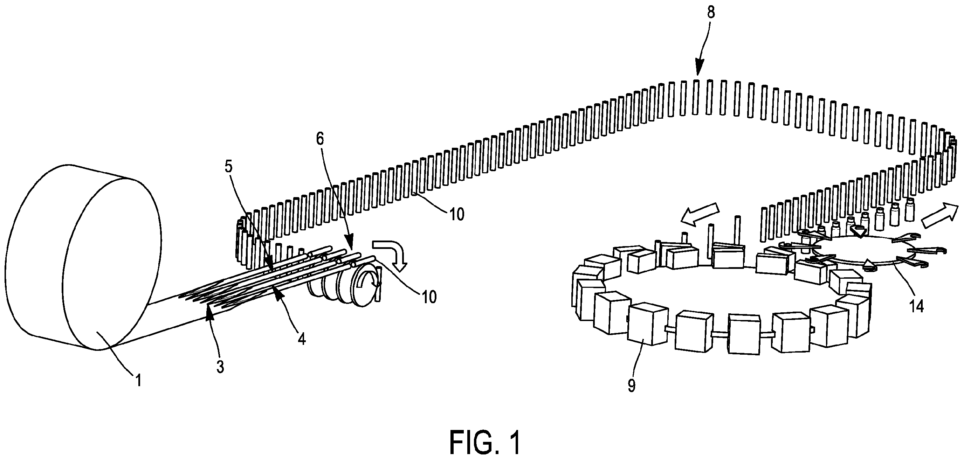

Selon l'invention, chaque tronçon 10 encore appelé préforme dans la suite de ce texte, est maintenu verticalement et transporté sur des moyens spécifiques appelés navettes. De façon particulière, la préforme 10 tourne autour de son axe longitudinal qui est vertical. Les préformes issues des différents postes de découpe sont regroupées et alignées selon une ligne de transport comme le montre la figure 1.

De façon intéressante, les préformes 10 sont transportées dans les navettes vers et à travers un four 8 de chauffage dans lequel elles sont déplacées par tout moyen connu en soi qui de ce fait ne sera pas décrit en détail. Un seul four 8 est ici nécessaire, contrairement à l'art antérieur connu qui nécessite un four par piste. Dans le four 8, les préformes 10 sont chauffées préférentiellement par des lampes de chauffage par rayonnement (non représentées sur les figures) disposées à proximité de la trajectoire des préformes. En outre, on peut placer des miroirs en face des lampes afin d'améliorer le chauffage par la réduction du nombre de lampes et donc la consommation électrique. A titre illustratif, la température moyenne du plastique dans le four 8 est d'environ 150°C. Par ailleurs le four 8 qui correspond à un volume globalement horizontal, est ainsi facilement accessible.

Les préformes 10 ne quittent la navette que lorsqu'elles sont prises en charge à l'étape suivante par un moule 11.

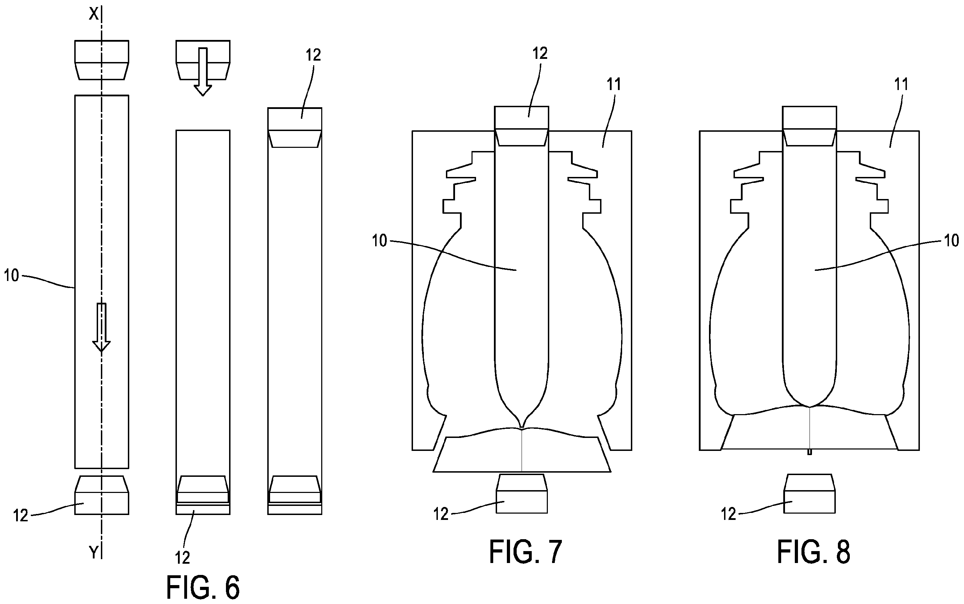

En sortie de four 8, les navettes qui supportent les préformes 10 permettent de les transférer, grâce à une synchronisation avec une première tourelle 9 ou carrousel, une à une dans des moules 11 placés sur la première tourelle 9 qui est en rotation autour de son axe principal vertical. De façon plus précise, les navettes sont transférées dans les moules au moment où chaque moule 11 passe à travers la navette. On synchronise la navette avec la première tourelle 9 au moment de la fermeture du moule 11. Une unité de pilotage permet cette synchronisation. Les figures 6 à 11 illustrent le traitement des préformes 10 jusqu'à leur placement dans le moule 11, avant l'étape de soufflage. Les navettes sont en fait constituées d'embouts 12 montés à chaque extrémité d'une préforme 10, qui tout en supportant les préformes 10, les font tourner autour de leur axe longitudinal XY. Tout moyen connu en soi apte à ce support et cette rotation est choisi de façon approprié par l'homme de métier ; ces moyens ne seront donc pas davantage décrits. A titre illustratif, la mise au pas et la synchronisation des navettes peuvent être réalisées par une vis sans fin synchrone avec la première tourelle 9.

Le nombre de moules du carrousel 9 est théoriquement indépendant du nombre de têtes de soudure 5 ; cependant on prévoit environ quatre à cinq moules pour une tête de soudure 5, soit seize à vingt moules pour quatre têtes de soudure.

La configuration caractéristique de l'invention permet de bien maîtriser la position de la soudure de la préforme 10 dans le moule 11. Il est ainsi possible d'orienter précisément la position de la préforme 10 au moment de la fermeture du moule 11 et ainsi de positionner la soudure à un endroit précis sur la bouteille finale. Ceci est particulièrement intéressant pour des bouteilles ovales, afin d'éviter la soudure au milieu des faces principales.

En sortie du four 8, la préforme 10 est chaude et elle est enfermée dans un moule 11 préférentiellement en deux parties (qui s'ouvre selon un plan médian vertical). Les figures 7 à 11 illustrent cette étape.

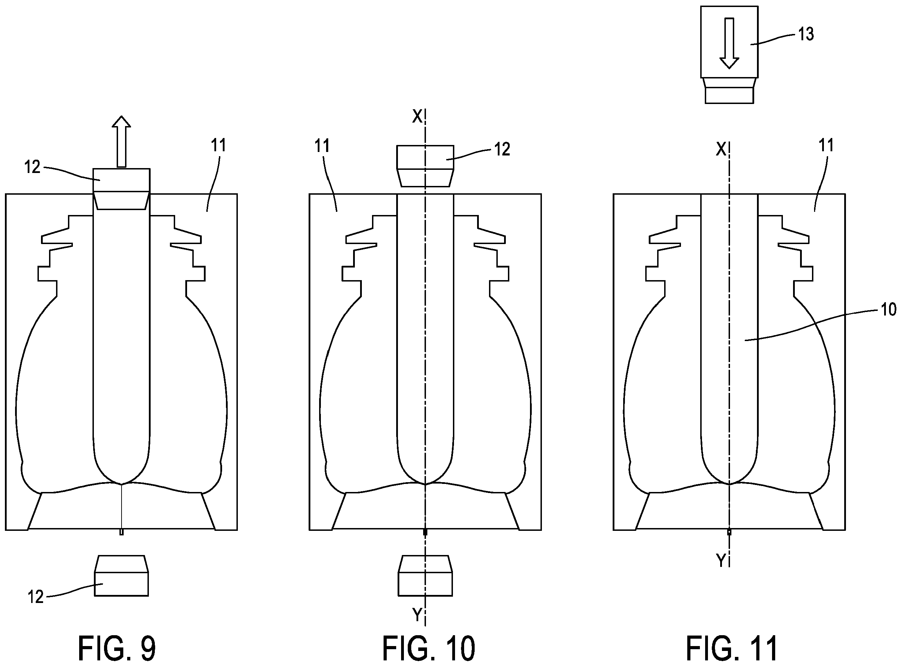

Comme montré sur la figure 11, un bec de soufflage 13 est placé en partie supérieure du moule 11, après sa fermeture. L'étanchéité en partie supérieure du moule 11 est réalisée entre ledit bec de soufflage 13 et le moule 11, grâce à la feuille de plastique interposée entre ces deux éléments. Une fois le moule fermé et le bec placé en partie supérieure, le bec 13 insuffle de l'air sous pression ce qui pousse le plastique contre la paroi intérieure froide du moule 11. Au contact de la paroi intérieure du moule 11, le plastique se durcit en prenant la forme souhaitée. Une bouteille est ainsi formée et elle est ensuite dirigée vers une deuxième tourelle 14 dont la rotation est synchronisée avec la rotation de la première tourelle 9. Cette technologie dite de soufflage rotatif permet de dissocier l'étape de soufflage de l'étape de soudure. Il est ainsi possible d'avoir un grand nombre de moules, augmenter la vitesse de soudure indépendamment de la durée du soufflage. De hautes cadences sont donc possibles, par exemple de l'ordre de 20 000 à 30 000 bouteilles par heure.

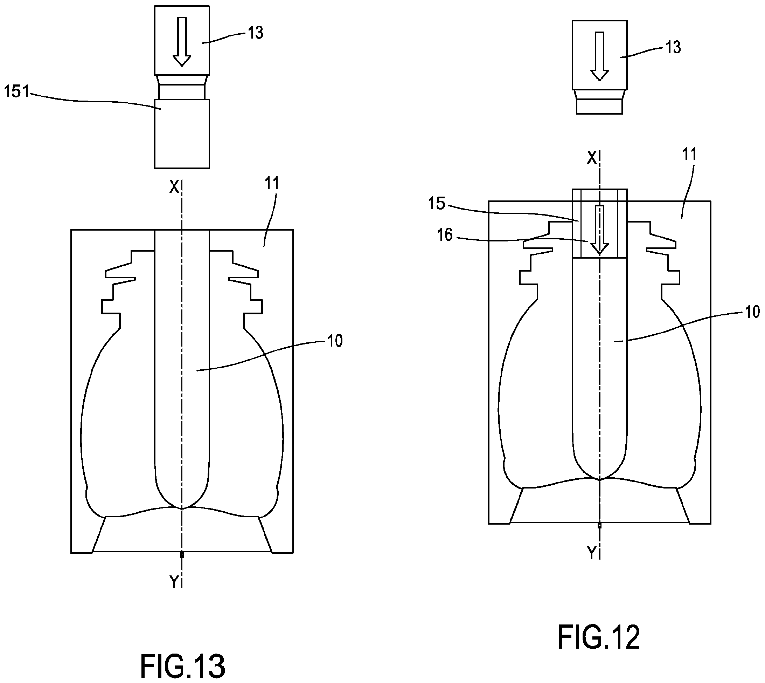

Selon une variante de réalisation illustrée à la figure 12, préalablement à la mise en place du bec de soufflage 13, un calibre de col 15 est positionné en partie supérieure du moule 11 au niveau d'une extrémité supérieure (sur la figure) de la préforme 10. La mise en place du calibre de col 15 est réalisée lorsque le moule 11 est fermé. Ensuite, le bec de soufflage 13 est positionné comme précédemment décrit. Le calibre de col 15 comporte, de manière coaxiale, un conduit 16 par lequel est insufflé l'air par le bec de soufflage 13. Selon une variante de réalisation, un embout du bec de soufflage 13 présente une forme complémentaire d'une forme de l'extrémité supérieure du calibre de col 15 de sorte que, une fois le bec de soufflage 13 mis en place, une étanchéité est assurée entre ce dernier et le calibre de col 15. D'autre part, un tel agencement du calibre de col 15 permet de réaliser une découpe du col de la bouteille ainsi formée, le calibre de col 15 en place.

De manière optionnelle, la machine selon l'invention comporte des moyens de thermorégulation propres du calibre de col 15. Cela permet de régler une température du calibre de col 15 de façon autonome et indépendante de sorte à optimiser le formage de la bouteille au niveau de son col.

En variante de réalisation illustrée à la figure 13, le calibre de col 151 est montée solidaire du bec de soufflage 13. Ici, le bec de soufflage 13 et le calibre de col 151 sont mis en place en une seule opération, une fois le moule 11 fermé. En variante, le calibre de col 151 et le bec de soufflage 13 sont monoblocs venus de matière l'un avec l'autre.

De plus, le moyen de commande du soufflage, tel qu'une électrovanne, peut être placée au plus près du moule 11 ; la durée du soufflage est courte, de l'ordre de deux à trois secondes ; le débit de soufflage est important ; les pertes de charge sont faibles ; la durée d'évacuation de la surpression dans la bouteille après soufflage est faible, de l'ordre de 0.2 secondes. De plus un soufflage rotatif permet de traiter des épaisseurs importantes de l'ordre de 1 à 1.5 mm sans pour autant réduire la vitesse de la machine ; l'art antérieur équivalent traite des épaisseurs de l'ordre de 0.8 à 1 mm.

Au niveau de la deuxième tourelle 14 chaque bouteille est extraite de son moule 11.

De ce qui précède il ressort que la machine selon l'invention permet de limiter les usures, les casses, d'éviter les problèmes de vibration et d'obtenir des cadences importantes par exemple de l'ordre de 20 000 à 30 000 bouteilles par heure, avec une fiabilité et une facilité de fabrication très avantageuses.

## Revendications

1. Machine de fabrication d'articles en plastique par soufflage, comprenant successivement le long du trajet de fabrication : un rouleau (1) de matière plastique sous la forme d'au moins une bande et des moyens (2) d'entrainement en rotation dudit rouleau ; au moins un conformateur (4) afin de former des tubes à partir de ladite bande **caractérisée en ce qu'elle** comprend en outre des moyens (5) de soudage longitudinal desdits tubes, fixes par rapport aux tubes mobiles ; des moyens (6) de découpe transversale des tubes, agencés de sorte à former des tronçons de tubes ou préformes (10) ; des moyens (12) de maintien et de déplacement des tronçons de tubes perpendiculairement à leur axe longitudinal ; au moins un four de chauffage (8) dans lequel se déplacent lesdits tronçons de tubes (préformes) en position verticale selon une trajectoire horizontale ; une première tourelle (9) de support de moules (11) dont la vitesse de rotation est synchronisée par une unité de pilotage avec la vitesse des tronçons de tubes en sortie du four (8) de sorte à les loger dans les moules (11) ; des moyens de traitement des tronçons de tubes (préformes) au niveau de la première tourelle (9) ; des moyens (13) de soufflage d'un fluide sous pression dans les moules (11) afin de donner une forme définitive aux préformes c'est-à-dire de former des bouteilles ; une deuxième tourelle (14) dont la vitesse est synchronisée avec la vitesse de ladite première tourelle (9) et agencée de sorte à évacuer les bouteilles en dehors desdits moules, ladite synchronisation étant opérée par l'unité de pilotage.

2. Machine selon la revendication 1, **caractérisé en ce qu'**elle comprend en outre un moyen (3) de découpage de la matière plastique en bandes longitudinales situé entre le rouleau (1) et le conformateur (4).

3. Machine selon l'une quelconque des revendications précédentes **caractérisée en ce que** ledit moyen de soudage (5) comprend au moins une sonotrode (50) agencée de sorte à réaliser un soudage en continu, par des soudures longitudinales desdits tubes, ladite sonotrode coopère avec une enclume (52) et des moyens de mise en contrainte de la bande(100).

4. Machine selon la revendication précédente **caractérisée en ce que** ladite enclume (52) présente un profil agencé de sorte à concentrer l'énergie de soudure selon une ligne.

5. Machine selon l'une quelconque des revendications précédentes **caractérisée en ce que** ledit conformateur (4) comprend des moyens de mise en forme placés en amont du moyen de soudage, tels que des diabolos (40).

6. Machine selon l'une quelconque des revendications précédentes **caractérisée en ce que** lesdits moyens (12) de maintien des tronçons de tubes (10) dans ledit four (8) permettent en outre la rotation desdits tronçons autour de leur axe longitudinal lorsque lesdits tronçons circulent dans ledit four (8).

7. Machine selon l'une quelconque des revendications précédentes **caractérisée en ce que** ledit four (8) comprend des moyens tels que des lampes de chauffage par rayonnement, disposées à proximité de la trajectoire desdits tronçons.

8. Machine selon l'une quelconque des revendications précédentes **caractérisée en ce que** l'unité de pilotage permet une synchronisation entre la vitesse de rotation de ladite première tourelle (9) et la vitesse de déplacement des moyens de maintien des tronçons de tubes dans ledit four.

9. Machine selon l'une quelconque des revendications précédentes **caractérisée en ce que** les moyens de traitement desdites préformes dans la première tourelle (9) comprennent des moyens pour ouvrir et fermer ledit moule, de façon synchronisée avec le soufflage dudit fluide à l'intérieur desdites préformes placées dans ledit moule (11).

10. Machine selon l'une quelconque des revendications précédentes **caractérisée en ce que** le plastique dans le four est chauffé à une température moyenne d'environ 150°C.

11. Machine selon l'une quelconque des revendications précédentes **caractérisée en ce que** les navettes coopèrent avec des moyens de maintien des préformes en deux points à proximité de leurs extrémités longitudinales.

12. Machine selon l'une quelconque des revendications précédentes, **caractérisée en ce que** les moyens de traitement desdites préformes dans la première tourelle (9) comprennent en outre des moyens de mise en place d'un calibre de col (15 ; 151) au niveau d'une extrémité longitudinale desdites préformes placées dans ledit moule (11), synchronisé avec le soufflage dudit fluide à l'intérieur desdites préformes.

13. Machine selon la revendication précédente, **caractérisé en ce qu'**elle comporte des moyens de thermorégulation propres du calibre de col.

## Patentansprüche

1. Maschine zur Herstellung von Kunststoffartikeln durch Blasformen, nacheinander entlang der Herstellungsstrecke Folgendes umfassend: eine Rolle (1) aus Kunststoffmaterial in Form mindestens eines Bandes und Mittel (2) zum Antreiben in Drehung der Rolle; mindestens einen Formgeber (4), um aus dem Band Rohre zu formen, **dadurch gekennzeichnet, dass** sie weiter Mittel (5) zum Längsschweißen der Rohre umfasst, die in Bezug auf die beweglichen Rohre feststehend sind; Mittel (6) zum Querschneiden der Rohre, derart angeordnet, um Rohrabschnitte oder Vorformlinge (10) zu formen; Mittel (12) zum Halten und Fortbewegen der Rohrabschnitte senkrecht zu deren Längsachse; mindestens einen Heizofen (8), in dem sich die Rohrabschnitte (Vorformlinge) in vertikaler Position entlang einer horizontalen Wegstrecke fortbewegen; einen ersten Turm (9) zum Halten von Formen (11), dessen Drehgeschwindigkeit durch eine Steuerungseinheit mit der Geschwindigkeit der Rohrabschnitte am Ausgang des Ofens (8) derart synchronisiert ist, um sie in die Formen (11) einzusetzen; Mittel zum Behandeln der Rohrabschnitte (Vorformlinge) im Bereich des ersten Turms (9); Mittel (13) zum Blasen eines unter Druck stehenden Fluids in die Formen (11), um den Vorformlingen eine endgültige Form zu verleihen, das heißt Flaschen zu formen; einen zweiten Turm (14), dessen Geschwindigkeit mit der Geschwindigkeit des ersten Turms (9) synchronisiert ist, und derart angeordnet, um die Flaschen aus den Formen heraus zu entladen, wobei die Synchronisation durch die Steuerungseinheit betrieben wird.

2. Maschine nach Anspruch 1, **dadurch gekennzeichnet, dass** sie weiter ein Mittel (3) zum Schneiden des Kunststoffmaterials in längliche Bänder umfasst, das zwischen der Rolle (1) und dem Formgeber (4) gelegen ist.

3. Maschine nach einem der vorstehenden Ansprüche, **dadurch gekennzeichnet, dass** das Schweißmittel (5) mindestens eine Sonotrode (50) umfasst, die derart angeordnet ist, um eine durchgehende Schweißung durch Längsschweißungen der Rohre durchzuführen, wobei die Sonotrode mit einem Amboss (52) und Mitteln zum Vorspannen des Bandes (100) zusammenwirkt.

4. Maschine nach dem vorstehenden Anspruch, **dadurch gekennzeichnet, dass** der Amboss (52) ein Profil aufweist, das derart angeordnet ist, um die Schweißenergie entlang einer Linie zu konzentrieren.

5. Maschine nach einem der vorstehenden Ansprüche, **dadurch gekennzeichnet, dass** der Formgeber (4) Formgebungsmittel, die stromaufwärts des Schweißmittels platziert sind, wie Doppelkegelrollen (40) umfasst.

6. Maschine nach einem der vorstehenden Ansprüche, **dadurch gekennzeichnet, dass** die Mittel (12) zum Halten der Rohrabschnitte (10) in dem Ofen (8) weiter das Drehen der Abschnitte um deren Längsachse herum ermöglichen, wenn die Abschnitte in dem Ofen (8) zirkulieren.

7. Maschine nach einem der vorstehenden Ansprüche, **dadurch gekennzeichnet, dass** der Ofen (8) Mittel, wie Lampen zum Heizen durch Strahlung umfasst, die in der Nähe der Wegstrecke der Abschnitte angeordnet sind.

8. Maschine nach einem der vorstehenden Ansprüche, **dadurch gekennzeichnet, dass** die Steuerungseinheit eine Synchronisation zwischen der Drehgeschwindigkeit des ersten Turms (9) und der Fortbewegungsgeschwindigkeit der Mittel zum Halten der Rohrabschnitte in dem Ofen ermöglicht.

9. Maschine nach einem der vorstehenden Ansprüche, **dadurch gekennzeichnet, dass** die Mittel zum Behandeln der Vorformlinge in dem ersten Turm (9) Mittel zum Öffnen und Schließen der Form in synchronisierter Weise mit dem Blasen des Fluids ins Innere der Vorformlinge umfassen, die in der Form (11) platziert sind.

10. Maschine nach einem der vorstehenden Ansprüche, **dadurch gekennzeichnet, dass** der Kunststoff im Ofen auf eine mittlere Temperatur von etwa 150 °C erwärmt wird.

11. Maschine nach einem der vorstehenden Ansprüche, **dadurch gekennzeichnet, dass** die Shuttles mit Mitteln zum Halten der Vorformlinge an zwei Punkten in der Nähe ihrer Längsenden zusammenwirken.

12. Maschine nach einem der vorstehenden Ansprüche, **dadurch gekennzeichnet, dass** die Mittel zum Behandeln der Vorformlinge in dem ersten Turm (9) weiter Mittel zum Anbringen eines Halskalibers (15; 151) im Bereich eines Längsendes der Vorformlinge, die in der Form (11) platziert sind, umfassen, die mit dem Blasen des Fluids ins Innere der Vorformlinge synchronisiert sind.

13. Maschine nach dem vorstehenden Anspruch, **dadurch gekennzeichnet, dass** sie Mittel zur Wärmeregulierung beinhaltet, die dem Halskaliber eigen sind.

## Claims

1. Machine for manufacturing plastic items by blow moulding, comprising, in series, along the manufacturing line: a roll (1) of plastic material in the form of at least one strip and means (2) for driving said roll in rotation; at least one shaper (4) for forming tubes from said strip **characterised in that** it further comprises means (5) for longitudinally welding said tubes, fixed in relation to the movable tubes; means (6) for cutting tubes transversally, arranged so as to form tube sections or preforms (10); means (12) for holding and moving tube sections perpendicularly to their longitudinal axis; at least one heating oven (8) wherein said tube sections (preforms) are moved in a vertical position according to a horizontal trajectory; a first turret (9) supporting moulds (11) of which the rotation speed is synchronised by a control unit with the speed of the tube sections at the outlet of the oven (8) in such a way as to house them in the moulds (11); means for processing tube sections (preforms) at the first turret (9); means (13) for blowing a pressurised fluid into the moulds (11) so as to give a final shape to the preforms, i.e. to form bottles; a second turret (14) of which the speed is synchronised with the speed of said first turret (9) and arranged in such a way as to discharge the bottles outside of said moulds, said synchronisation being operated by the control unit.

2. Machine according to claim 1, **characterised in that** it further comprises a means (3) for cutting the plastic material into longitudinal strips located between the roll (1) and the shaper (4).

3. Machine according to any preceding claim **characterised in that** said means for welding (5) comprises at least one sonotrode (50) arranged in such a way as to carry out a continuous welding, by longitudinal welds of said tubes, said sonotrode cooperates with an anvil (52) and means for stressing the strip (100).

4. Machine according to the preceding claim **characterised in that** said anvil (52) has a profile arranged in such a way as to concentrate the weld energy along a line.

5. Machine according to any preceding claim **characterised in that** said shaper (4) comprises means for shaping placed upstream from the means for welding, such as diabolos (40) .

6. Machine according to any preceding claim **characterised in that** said means (12) for holding tube sections (10) in said oven (8) furthermore allow for the rotation of said sections along their longitudinal axis when said sections circulate in said oven (8).

7. Machine according to any preceding claim **characterised in that** said oven (8) comprises means such as radiant heat lamps, disposed in the vicinity of the trajectory of said sections.

8. Machine according to any preceding claim **characterised in that** the control unit allows for a synchronisation between the rotation speed of said first turret (9) and the movement speed of the means for holding tube sections in said oven.

9. Machine according to any preceding claim **characterised in that** the means for processing said preforms in the first turret (9) comprise means for opening and closing said mould, in a synchronised manner with the blowing of said fluid inside said preforms placed in said mould (11).

10. Machine according to any preceding claim **characterised in that** the plastic in the oven is heated to an average temperature of about 150°C.

11. Machine according to any preceding claim **characterised in that** the shuttles cooperate with means for holding preforms at two points in the vicinity of their longitudinal ends.

12. Machine according to any preceding claim, **characterised in that** the means for processing said preforms in the first turret (9) further comprise means for setting a neck gauge (15; 151) in place at a longitudinal end of said preforms placed in said mould (11), synchronised with the blowing of said fluid inside said preforms.

13. Machine according to the preceding claim, **characterised in that** it includes specific means for thermoregulating the neck gauge.
